# EUROPEAN PATENT APPLICATION

(11) **EP 2 937 552 A1**
(43) Date of publication of application: **28.10.2015**
(21) Application number: 14753901.9
(22) Date of filing: 17.02.2014
(51) Int. Cl.: F02K 9/64, B64G 1/00, F02K 9/46, F02K 9/68

(54) **ROCKET ENGINE, ROCKET, AND METHOD FOR STARTING ROCKET ENGINE**

(30) Priority: 19.02.2013 JP 2013030410
(71) Applicant: Mitsubishi Heavy Industries, Ltd., Tokyo 108-8215 (JP)
(72) Inventor: KAWAMATA Yoshihiro, Tokyo 108-8215 (JP); OBASE Kimihito, Tokyo 108-8215 (JP)
(74) Representative: Henkel, Breuer & Partner
(86) International application number: PCT/JP2014/053611
(87) International publication number: WO 2014/129419

(57) **Abstract**

A rocket engine is provided with a fuel flow path (31-39), a catalyst part (51), a turbine (12), a first pump (11), a combustion chamber (21), and a nozzle (22). Hydrocarbon-based fuel flows through the fuel flow path (31-39). The catalyst part (51) is provided in the middle of the fuel flow path (31-39), and gasifies the fuel. The turbine (12) is driven by the gasified fuel. The first pump (11) supplies the fuel to the fuel flow path (31-39) by the driving of the turbine (12). The combustion chamber (21) burns the gasified fuel supplied from the fuel flow path (31-39), and an oxidizing agent. The nozzle (22) delivers combustion gas in the combustion chamber (21) and is cooled by heat exchange with part of the fuel flow path (31-39).

## Description

### Technical Field

The present invention relates to a rocket engine, especially, to a liquid rocket engine using hydrocarbon as fuel.

### Background Art

A liquid rocket engine using hydrocarbon as propellant is known. The liquid rocket engine has a turbo pump for supplying the propellant (oxidizer and hydrocarbon). The turbo pump is driven with the rotation of a turbine. The turbine is rotated with a combustion gas which is generated by an auxiliary combustor called a gas generator (sub combustor) which uses hydrocarbon as fuel, and LOX (Liquid Oxygen) as oxidizer. For example, Non-Patent Literature 1 discloses the liquid rocket engine to which such a gas generator cycle is applied.

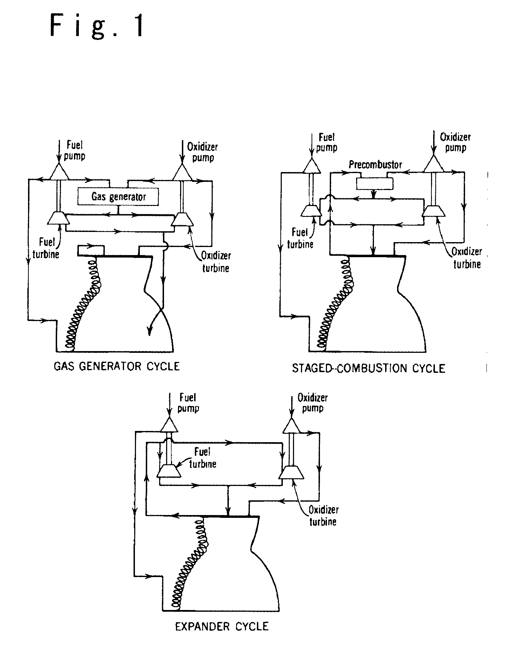

FIG. 1 is a diagram schematically showing the configurations of the liquid rocket engines described in Non-Patent Literature 1. In FIG. 1, a diagram in the upper left portion shows the liquid rocket engine to which a gas generator cycle is applied. In this rocket engine, a fuel pump and an oxidizer pump are used as turbo pumps. The fuel pump is driven by a fuel turbine, and the oxidizer pump is driven by an oxidizer the turbine. Thus, the fuel turbine and the oxidizer turbine are driven by the combustion gas generated in the gas generator.

When such a gas generator cycle is applied to the liquid rocket engine, there are the following problems. The first problem is in that an additional combustor becomes necessary. Because the additional combustor becomes necessary, there is a fear that the reliability decreases and a cost becomes high. The second problem is in that the combustion gas used to drive the turbines is exhausted just as it is. Because the energy of the combustion gas used to drive the turbines is not effectively utilized, an energy loss is big. The third problem is in that a very high reliability is required for the gas generator. Though the operation environment is severe because the gas generator is used for the combustion, a trouble of the gas generator is fatal to the rocket engine. When the gas generator breaks down, the liquid rocket engine loses a turbine driving force immediately so that it becomes difficult to supply the fuel and the oxidizer. In this way, the system of the rocket engine is not robust.

An upper right portion of FIG. 1 shows a rocket engine using a staged combustion cycle. In this rocket engine, a precombustor is provided in front of the combustor, and a precombustion gas of the precombustor drives the fuel turbine and the oxidizer turbine and is supplied to the combustor. In this case, because the precombustion gas after driving the turbines is further used for the combustion, the above second problem does not occur. However, because the precombustor as an auxiliary combustor is used, the first and third problems remain. Also, a lower portion of FIG. 1 shows the rocket engine using an expander cycle which uses vaporization and expansion of the liquid-hydrogen. It is difficult to apply this rocket engine to the rocket engine using hydrocarbon as the fuel.

### Citation List

### [Non-Patent Literature]

[Non-Patent Literature 1] George P. Sutton, Oscar Biblarz, "Rocket Propulsion Elements", Seventh Edition, John Wiley & Sons, Inc., p. 223 (Figures 6 - 9), (2001).

### Summary of the Invention

Therefore, an object of the present invention is to provide a rocket engine which has a high reliability and few energy losses and which uses a hydrocarbon fuel. Also, another object of the present invention is to provide a robust rocket engine using a hydrocarbon fuel. Also, still another object of the present invention is to provide a rocket engine in which the mixing of fuel and oxidizer is promoted, in which the combustion efficiency is improved and the exhaust of gas is made unnecessary, and which uses the hydrocarbon fuel.

These objects of the present invention, and objects and advantages except for them can be easily confirmed by the following description and the attached drawings.

A rocket engine of the present invention is provided with a fuel passage of pipes, a catalyst section, a turbine, a first pump, a combustion chamber and a nozzle. A hydrocarbon fuel flows through the fuel passage of pipes. The catalyst section is provided on the way of the fuel passage of pipes to gasify the fuel. The turbine is provided on the way of the fuel passage of pipes and is driven with the gasified fuel. The first pump supplies the fuel to the fuel passage through the drive by the turbine. The combustion chamber combusts the gasified fuel supplied from the fuel passage of pipes and the oxidizer. The nozzle sends out the combustion gas from the combustion chamber, and carries out heat exchange with a part of the fuel passage of pipes for the nozzle to be cooled.

In the above-mentioned rocket engine, the fuel passage of pipes may have a first path and a second path. The first path leads the fuel to the combustion chamber after the heat exchange with the nozzle and gasification of the fuel in the catalyst section. The second path leads the fuel to the combustion chamber just as it is. The combustion chamber may combust the mixed fuel of the gasified fuel supplied through the first path and the fuel supplied through the second path.

In the above-mentioned rocket engine, the catalyst section may be provided inside the fuel passage of pipes at a location where the heat exchange with the nozzle is carried out on the way of the fuel passage of pipes.

In the above-mentioned rocket engine, the catalyst section carries out thermochemical decomposition of the fuel to gasify the fuel. The endothermic reaction of the thermochemical decomposition may cool the nozzle.

In the above-mentioned rocket engine, the catalyst section may be formed in a layer to cover the inner wall of the fuel passage of pipes.

In the above-mentioned rocket engine, the catalyst section may be provided on a rear side of a location which is on the way of the fuel passage of pipes and in which the heat exchange with the nozzle is carried out.

In the above-mentioned rocket engine, the catalyst section may be formed from a plurality of catalyst grains in a container.

The above-mentioned rocket engine may further include an oxidizer passage of pipes and a second pump. The oxidizer flows to the combustion chamber through the oxidizer passage of pipes. The second pump supplies the oxidizer to the oxidizer passage of pipes through the drive by the turbine. The turbine, the first pump and the second pump are connected with the same rotation axis.

A rocket of the present invention is provided with the rocket engine, a fuel tank and an oxidizer tank. The rocket engine is described in the above. The fuel tank is connected with the fuel passage of the rocket engine. The oxidizer tank is connected with the oxidizer passage of the rocket engine.

A start method of a rocket engine according to the present invention includes supplying a hydrocarbon fuel and an oxidizer to a combustion chamber by using a pressure to combust there. Moreover, when the combustion chamber is heated through the combustion, the method includes supplying the fuel to the catalyst section by using the pressure while cooling a nozzle by heat exchange, to gasify the fuel.

Moreover, the method includes driving the turbine with the gasified fuel. Moreover, the method includes driving the first pump by the turbine to gasify a part of the fuel in a catalyst section while cooling the nozzle through the heat exchange. Moreover, the method includes driving the first pump by the turbine to supply a remaining part of the fuel to the combustion chamber. Moreover, the method includes driving a second pump by the turbine to supply the oxidizer to the combustion chamber. Moreover, the method includes combusting the gasified fuel, the supplied fuel and the supplied oxidizer in the combustion chamber.

According to the present invention, in the rocket engine using the hydrocarbon fuel, the reliability can be made higher, and the energy loss can be made few. Also, in the rocket engine using the hydrocarbon fuel, the robust property can be improved. Also, in the rocket engine using the hydrocarbon fuel, the mixing of the fuel and the oxidizer is promoted, so that the exhaust of gas is eliminated and the combustion efficiency can be improved.

### Brief Description of the Drawings

FIG. 1 is a diagram schematically showing the configuration of a liquid rocket engine disclosed in Non-Patent Literature 1.
FIG. 2 is a diagram schematically showing the configuration of a rocket engine according to a first embodiment and a rocket to which the same is applied.
FIG. 3 is a diagram schematically showing an example of a catalyst section of the rocket engine according to the first embodiment.
FIG. 4 is a flow chart showing a start operation of the rocket engine according to the first embodiment.
FIG. 5 is a diagram schematically showing the configuration of the rocket engine according to a second embodiment and the rocket to which the same is applied.

### Description of Embodiments

Hereinafter, a rocket engine according to embodiments of the present invention and a rocket to which the rocket engine is applied will be described with reference to the attached drawings.

### [First Embodiment]

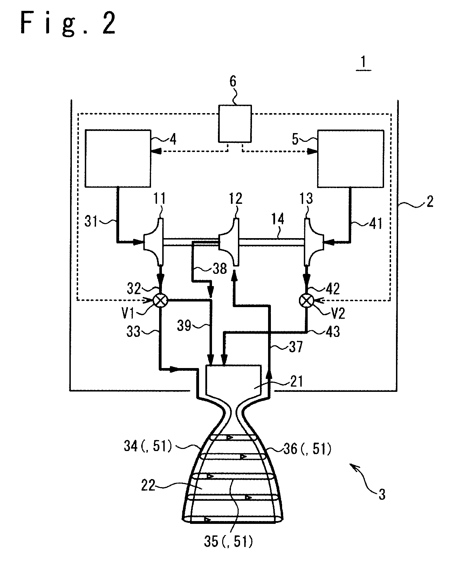

The configurations of the rocket engine according to a first embodiment and the rocket applied with the same will be described. FIG. 2 is a diagram schematically showing the configurations of the rocket engine according to the present embodiment and the rocket applied with the same. The rocket 1 flies by combusting the fuel of hydrocarbon by using the oxidizer and by spouting out the combustion gas. The rocket 1 is provided with a rocket main unit 2 and a rocket engine 3.

The rocket main unit 2 has a fuel tank 4, an oxidizer tank 5 and a control unit 6. The fuel tank 4 stores a liquid hydrocarbon fuel. The fuel tank 4 sends out the fuel to the rocket engine 3 by means of gas pressurization and so on, based on the control of the control unit 6. The oxidizer tank 5 stores a liquid oxidizer (e.g. LOX). The oxidizer tank 5 sends out an oxidizer to the rocket engine 3 by means of the gas pressurization and so on, based on the control of the control unit 6. The control unit 6 is an information processing apparatus such as a computer which has a processor (e.g. CPU), a storage unit (e.g. RAM and ROM), and an interface, which are not illustrated. The control unit 6 may further have an input unit (e.g. a keyboard) and an output unit (e.g. a display). The control unit 6 controls the fuel tank 4, the oxidizer tank 5 and the rocket engine 3 at least through the interface.

The rocket engine 3 is supplied with the liquid hydrocarbon fuel from the fuel tank 4 and with the oxidizer from the oxidizer tank 5, and combusts the fuel with the oxidizer to generate and spout out a combustion gas. The rocket engine 3 includes a fuel passage of pipes 31 to 39, a catalyst section 51, a turbine 12, a first pump 11, a second pump 13, a combustion chamber 21, a nozzle 22, an oxidizer passage of pipes 41 to 43, a valve V1, a valve V2 and a rotation axis 14.

The fuel passage of pipes 31 to 39 is a passage through which the hydrocarbon fuel flows. The catalyst section 51 is provided on the way of the fuel passage of pipes 31 to 39 to gasify the fuel. The turbine 12 is provided on the way of the fuel passage of pipes 31 to 39 and is driven with the gasified fuel. The first pump 11 is driven by the turbine 12 to supply the fuel to the fuel passage of pipes 31 to 39. The second pump 13 is driven by the turbine 12 to supply the oxidizer to the oxidizer passage of pipes 41 to 43. The first pump 11 and the second pump 13 are turbo pumps. The combustion chamber 21 combusts the fuel (containing the gasified fuel) supplied through the fuel passage of pipes 31 to 39, using the oxidizer. The nozzle 22 is a rocket nozzle which sends out the combustion gas generated in the combustion chamber 21. Also, the nozzle 22 is cooled through heat exchange with a part of the fuel passage of pipes 31 to 39. The oxidizer passage of pipes 41 to 43 is a passage through which the oxidizer flows to the combustion chamber 21. The valve V1 selects at least one of a path of supplying the fuel directly to the combustion chamber 21 and a path of supplying the fuel to the combustion chamber 21 after the heat exchange with the nozzle 22 in the fuel passage of pipes 31 to 39, based on the control of the control unit 6. Or, the valve V1 stops the supply of the fuel. The valve V2 supplies the oxidizer to the combustion chamber 21 through the oxidizer passage of pipes 41 to 43 or stops the supply of the oxidizer, based on the control of the control unit 6. The rotation axis 14 connects the turbine 12, the first pump 11 and the second pump 13 in common. The rotation axis 14 is rotation-driven by the turbine 12 to drive the first pump 11 and the second pump 13 which are coaxial, to be rotated.

The fuel passage of pipes 31 to 39 is the path through which the hydrocarbon fuel flows, and is connected with the fuel tank 4 at its one end, and the combustion chamber 21 at its other end. Of them, the pipe 31 has one end connected with the fuel tank 4 and the other end connected with a supply port of the first pump 11. The pipe 31 supplies the fuel of the fuel tank 4 to the first pump 11. The first pump 11 discharges the fuel to the fuel pipe 32. The pipe 32 has one end connected with a supply port of the valve V1 and the other end connected with a discharge port of the first pump 11. The pipe 32 supplies the fuel from the first pump 11 to the valve V1. The valve V1 supplies the fuel from the pipe 32 to at least one of the pipe 33 and the pipe 39. The pipe 33 is connected with one of discharge ports of the valve V1 at its one end and is connected with the one end of the fuel pipes 34 at its other end. The pipe 33 supplies the fuel sent out from the valve V1, to the fuel passage of pipe 34.

One or more pipes 34 are provided as the fuel passage to extend along the upper and lower direction on the side surface of the combustion chamber 21 and to extend along the upper and lower direction on the side surface of the nozzle 22. Especially, on the side surface of the nozzle 22, the pipes 34 extend along the upper and lower direction between the proximate end of the nozzle 22 and the distal end. One or more pipes 34 have middle points and the distal end connected with one ends of a plurality of fuel pipes 35. The one or more pipes 34 supply the fuel supplied from the pipe 33 to the plurality of pipes 35. The plurality of pipes 35 are provided to extend in parallel to each other in the left and right direction on the side surface of the nozzle 22. Each of the plurality of pipes 35 has connection ends connected with the middle portions or the distal end of the fuel pipe 34. The plurality of pipes 35 supply the fuel supplied from the plurality of pipes 34 to one or more pipes 36. The pipes 36 are provided to extend along the upper and lower direction on the side surface of the nozzle 22 and to extend along the upper and lower direction on the side surface of the combustion chamber 21. Especially, on the side surface of the nozzle 22, the pipes 36 extend along the upper and lower direction between the proximate end of the nozzle 22 and the distal end thereof. The pipes 36 have middle portions and the distal end connected with the plurality of pipes 35. The pipes 36 supply the fuel sent through the plurality of pipes 35 to the pipe 37.

In this way, the fuel passage of pipes 34 to 36 is provided along the surfaces of the combustion chamber 21 and the nozzle 22. The temperature of the fuel in the fuel passage of pipes 34 to 36 is relatively cold and the temperature of the combustion gas in the combustion chamber 21 and the nozzle 22 is relatively hot. That is, the fuel passage of pipes 34 to 36 is relatively cold and the combustion chamber 21 and the nozzle 22 are relatively hot. Therefore, the fuel passage of pipes 34 to 36 carries out heat exchange with the combustion chamber 21 and the nozzle 22 to cool the combustion chamber 21 and the nozzle 22. On the other hand, the fuel in the fuel passage of pipes 34 to 36 is heated through the heat exchange.

Also, at least a part of the fuel passage of pipes 34 to 36 contains the catalyst section 51. The catalyst section 51 converts the hydrocarbon fuel into a hydrocarbon fuel having the smaller number of carbons through a thermochemical decomposition reaction. The fuel after this reaction is easy to gasify because the boiling point of it is low. That is, the liquid fuel gasifies through the thermochemical decomposition reaction of the hydrocarbon fuel by the catalyst section 51 in (at least a part of) the fuel passage of pipes 34 to 36. At this time, the thermochemical decomposition reaction is an endothermic reaction. Therefore, (at least a part of) the fuel passage of pipes 34 to 36 can cool the combustion chamber 21 and the nozzle 22 even by the endothermic reaction.

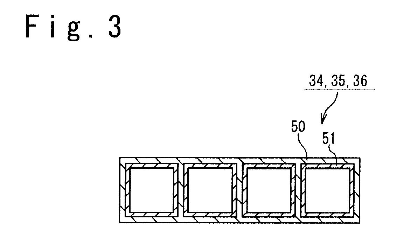

FIG. 3 is a diagram schematically showing an example of the catalyst section of the rocket engine according to the present embodiment. FIG. 3 shows a sectional view of the fuel passage of pipes 34 to 36. The catalyst is arranged at the inside of each pipe of the fuel passage of pipes 34 to 36 to configure the catalyst section 51. The catalyst is formed in a layer to cover the inner wall of the pipe 50 in FIG. 3. However, if the pipe 50 is not blockaded, the catalyst in a granular condition or in a ring condition may be used. It is desirable from the reaction efficiency that the catalyst in the catalyst section 51 contains at least one of the zeolite catalyst such as H-ZSM-5 catalyst, PGM (Platinum Group Metals) catalyst such as platinum catalyst, palladium catalyst and the rhodium catalyst, and oxide catalyst having a wide surface area, or a composition of them. Also, it is further desirable that the catalyst contains one or both of the zeolite catalyst holding element(s) of a platinum group and the oxide catalyst holding element(s) of the platinum group and having a wide surface area.

Also, referring to FIG. 2 again, the fuel passage of pipe 37 is connected with one or more fuel passage of pipe 36 at one end and connected with a supply port of the turbine 12 at the other. The fuel passage of pipe 37 supplies the fuel gasified in the fuel passage of pipes 34 to 36 to the turbine 12. The turbine 12 is rotated with the gasified fuel so that the rotation axis 14 is rotated. The first pump 11 and the second pump 13 are driven by the rotation of the rotation axis 14. The fuel passage of pipe 38 is connected with a discharge port of the turbine 12 at its one end and with a middle point of the fuel passage of pipe 39 at its other end. The fuel passage of pipe 38 supplies the gasified fuel which has rotated the turbine 12, to (the middle point of) the fuel passage of pipe 39. The fuel passage of pipe 39 is connected with another discharge port of the valve V1 at its one end and with the combustion chamber 21 at its other end. The fuel passage of pipe 39 supplies at least one of fuel sent out from the valve V1 and the gasified fuel supplied from the fuel passage of pipe 38 to the combustion chamber 21.

That is, the fuel passage of pipes 31 to 39 can be regarded as having a first path (fuel passage of pipes 31 to 39) and a second path (fuel passage of pipes 31, 32, and 39). However, the first path (fuel passage of pipes 31 to 39) leads the fuel to the combustion chamber 21 after carrying out heat exchange in the nozzle 22 and gasifying in the catalyst section 51. The catalyst section 51 is provided inside the fuel passage in a part of the nozzle 22 where the heat exchange is carried, on the way of the fuel passage of pipes 31 to 39. The second path (fuel passage of pipes 31, 32, and 39) leads the fuel to the combustion chamber 21 just as it is. The combustion chamber 21 combusts one of the gasified fuel supplied through the first path (fuel passage of pipes 31 to 39), and the fuel supplied through the second path (fuel passage of pipes 31, 32, and 39) or a mixed fuel of both of them.

The oxidizer passage of pipes 41 to 43 are an oxidizer path through which the oxidizer flows, is connected with the oxidizer tank 5 at its one end, and connected with the combustion chamber 21 in its other end. Of them, the oxidizer passage of pipe 41 is connected with the oxidizer tank 5 at its one end and with a supply port of the second pump 13 at its other end. The oxidizer passage of pipe 41 supplies the oxidizer of the oxidizer tank 5 to the second pump 13. The second pump 13 discharges the oxidizer to the oxidizer passage of pipe 42. The oxidizer passage of pipe 42 is connected with a discharge port of the second pump 13 at its one end and with a supply port of the valve V2 at its other end. The oxidizer passage of pipe 42 supplies the oxidizer discharged from the second pump 13 to the valve V2. The valve V2 supplies the oxidizer from the oxidizer passage of pipe 42 to the oxidizer passage of pipe 43. The oxidizer passage of pipe 43 is connected with one of the discharge ports of the valve V2 at its one end and with the combustion chamber 21 in its other end. The oxidizer passage of pipe 43 supplies the oxidizer sent from the valve V2 to the combustion chamber 21.

Next, the operation of the rocket engine according to the present embodiment will be described.

### 1. Start operation

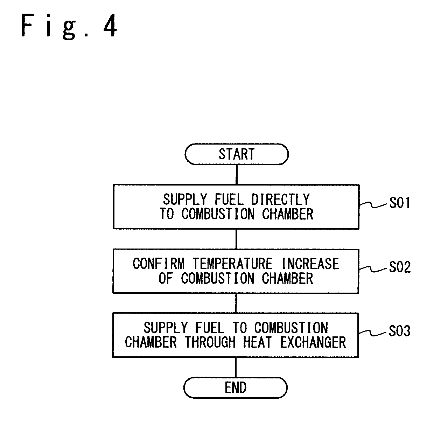

FIG. 4 is a flow chart showing the start operation of the rocket engine according to the present embodiment. First, based on the control of the control unit 6, the liquid hydrocarbon fuel of the fuel tank 4 is supplied directly to the combustion chamber 21. Simultaneously with it, based on the control of the control unit 6, the oxidizer of the oxidizer tank 5 is supplied to the combustion chamber 21 (Step S01). Specifically, the fuel of the fuel tank 4 is supplied to the combustion chamber 21 through the fuel passage of pipe 31 - the first pump 11 - the fuel passage of pipe 32 - the valve V1 - the fuel passage of pipe 39 with the pressure by gas. At the same time, based on the control of the control unit 6, the oxidizer of the oxidizer tank 5 is supplied to the combustion chamber 21 through the oxidizer passage of pipe 41 - the second pump 13 - the oxidizer passage of pipe 42 - the valve V2 with the pressure of gas. Thus, the fuel and the oxidizer are combusted. As a result, the combustion chamber 21 and the nozzle 22 are heated through the combustion (with the combustion gas). In this case, because the fuel and the oxidizer are supplied through the first pump 11 and the second pump 13, which are not driven, only with the gas pressurization, the flow rates of the fuel and the oxidizer are not so much.

Next, the control unit 6 checks and confirms whether the temperature of the combustion chamber 21 has risen to a predetermined temperature through the heating of the combustion (Step S2). For example, the temperature of the combustion chamber 21 is measured by a temperature sensor (not shown). Or, it may assume that the temperature of the combustion chamber 21 has risen to the predetermined temperature as the result of that a predetermined time passed after the supply of the fuel and the oxidizer is started. Or, another parameter may be measured and it may be determined whether or not the temperature of the combustion chamber 21 has risen to the predetermined temperature.

After that, when the rising to the predetermined temperature is confirmed, the fuel is supplied to the combustion chamber 21 through the heat exchange (in the passage of pipes 34 to 36) in addition to supplying to the combustion chamber 21 just as it is, based on the control of the control unit 6 (Step S03). Specifically, based on the control of the control unit 6, the opening of the valve V1 is changed so that the fuel flows through the fuel passage of pipe 33 in addition to the fuel passage of pipe 39. That is, by the gas pressurization, the fuel of the fuel tank 4 is supplied to the combustion chamber 21 through the fuel passage of pipe 31 - the first pump 11 - the fuel passage of pipe 32 - the valve V1 - the fuel passage of pipe 39, and at the same time, through the valve V1 - the fuel passage of pipe 33 - the fuel passage of pipe 34 - the fuel passage of pipe 35 - the fuel passage of pipe 36. At this time, the fuel of the fuel passage of pipe 34 - the fuel passage of pipe 35 - the fuel passage of pipe 36 is heat-exchanged with the combustion chamber 21 and the nozzle 22 to cool the combustion chamber 21 and the nozzle 22. Together with this, the catalyst section 51 provided in at least a part of the fuel passage of pipe 34 - the fuel passage of pipe 35 - the fuel passage of pipe 36 is subjected to the thermochemical decomposition to generate the gasified fuel, which cools the nozzle 22 by the endothermic reaction.

The fuel gasified in at least a part of the fuel passage of pipe 34 - the fuel passage of pipe 35 - the fuel passage of pipe 36 is supplied to the turbine 12 through the fuel passage of pipe 37 to drive the turbine 12. The gasified fuel which has driven the turbine 12 is supplied to the combustion chamber 21 through the fuel passage of pipe 38 - the fuel passage of pipe 39. The first pump 11 is driven through the drive by the turbine 12. Thus, the first pump 11 suctions the fuel of the fuel tank 4 from the supply port and discharges from the discharge port. At the same time, the second pump 13 is driven through the drive by the turbine 12. Thus, the second pump 13 suctions the oxidizer of the oxidizer tank 5 from the supply port and discharges from the discharge port. Accordingly, on the side of fuel, the fuel of a desired flow rate is supplied to the fuel passage of pipes 31 to 39 through the drive by the first pump 11. As a result, a part of fuel gasifies in the fuel passage of pipes 34 to 36, and is mixed with the remaining liquid fuel in the fuel passage of pipe 39 and is supplied to the combustion chamber 21. Also, on the side of the oxidizer, the oxidizer of a desired flow rate is supplied to the combustion chamber 21 through the drive by the second pump 13. Thus, continual combustion is carried out in the combustion chamber 21.

As mentioned above, the rocket engine 3 according to the present embodiment starts.

### 2. Ordinary operation

The first pump 11 is driven through the drive by the turbine 12. Thus, the first pump 11 suctions the fuel of the fuel tank 4 from the supply port through the fuel passage of pipe 31 steadily and discharges from the discharge port to the valve V1 through the fuel passage of pipe 32. At the same time, the second pump 13 is driven through the drive by the turbine 12. Thus, the second pump 13 suctions the oxidizer of the oxidizer tank 5 from the supply port through the oxidizer passage of pipe 41 steadily and discharges from the discharge port to the valve V2 through the oxidizer passage of pipe 42.

A part of fuel is supplied through the valve V1 - the fuel passage of pipe 33 - the fuel passage of pipe 34 - the fuel passage of pipe 35 - the fuel passage of pipe 36, depending on the opening of the valve V1. On the other hand, the remaining fuel is supplied to the combustion chamber 21 through the valve V1 - the fuel passage of pipe 39. A part of the fuel is used for heat exchange with the combustion chamber 21 and the nozzle 22 in the fuel passage of pipe 34 - the fuel passage of pipe 35 - the fuel passage of pipe 36, to cool them. With this, a part of the fuel is subjected to the thermochemical decomposition by the catalyst section 51 provided in at least a part of the fuel passage of pipe 34 - the fuel passage of pipe 35 - the fuel passage of pipe 36 to be gasified so as to cool the combustion chamber 21 and the nozzle 22 by the endothermic reaction. The gasified fuel is supplied to the turbine 12 through the fuel passage of pipe 37 to drive the turbine 12. The gasified fuel which has driven the turbine 12 is supplied to the combustion chamber 21 through the fuel passage of pipe 38 - the fuel passage of pipe 39.

The oxidizer is supplied to the combustion chamber 21 through the valve V2 - the oxidizer passage of pipe 43. Thus, the gasified fuel, the liquid fuel and the liquid oxidizer are mixed and combusted in the combustion chamber 21.

As mentioned above, the rocket engine 3 according to the present embodiment operates steadily.

In the present embodiment, a part of the total flow of hydrocarbon fuel is supplied to the fuel passage of pipes 34 to 36 for the cooling of the combustion chamber 21 and the nozzle 22. The liquid hydrocarbon fuel is thermochemically decomposed into the gasified fuel by the catalyst section 51 provided in the fuel passage of pipes 34 to 36 for this cooling. Thus, the gasified fuel is used as a driving gas of the turbine 12 for driving the turbo pumps (the first pump 11 and the second pump 13) for the supply of the oxidizer and the fuel without combusting. It is desirable that 50% to 80% of the total flow of fuel is supplied to the fuel passage of pipes 34 to 36 for the cooling. When less than 50%, the sufficient cooling effect by the fuel passage of pipes 34 to 36 cannot be obtained. When more than 80%, the fuel passage of pipes 34 to 36 is too much cooled so that it becomes difficult for the thermochemical decomposition to be caused.

Also, in the present embodiment, the gasified fuel used to drive the turbine 12 is mixed with the remaining liquid fuel and supplied into the combustion chamber 21 and combusted there. Thus, all the fuel can be used for the combustion in the combustion chamber 21 without any wastefulness and the energy loss can be reduced.

Also, in the present embodiment, because the fuel to be supplied to the combustion chamber 21 is the mixture of the liquid fuel and the gaseous fuel, it becomes easy to mix the fuel and the oxidizer in the combustion chamber 21. As a result, the combustion can be promoted. Thus, the combustion efficiency can be more improved.

In the present embodiment, the gas generator (the auxiliary combustor) disclosed in Non-Patent Literature 1 can be removed. Thus, the mass of the rocket engine can be made light and the reliability can be more improved. Also, in the present embodiment, because the combustion gas is not generated which is discharged when the gas generator (the auxiliary combustor) is used in Non-Patent Literature 1, the energy loss can be reduced and the energy efficiency can be more improved. Moreover, in the present embodiment, because the turbine is driven by using a gas generated by the thermochemical decomposition reaction which utilizes heat of the combustion chamber without using the combustion gas in the combustion chamber, unlike Non-Patent Literature 1, the probability of a trouble of a turbine drive system can be substantially decreased.

### [Second Embodiment]

The configurations of the rocket engine according to a second embodiment and the rocket to which the same is applied will be described. The present embodiment differs from the first embodiment in the point that the catalyst section is not provided in the pipe of the fuel passage but is provided as a different body. Below, different points will be mainly described.

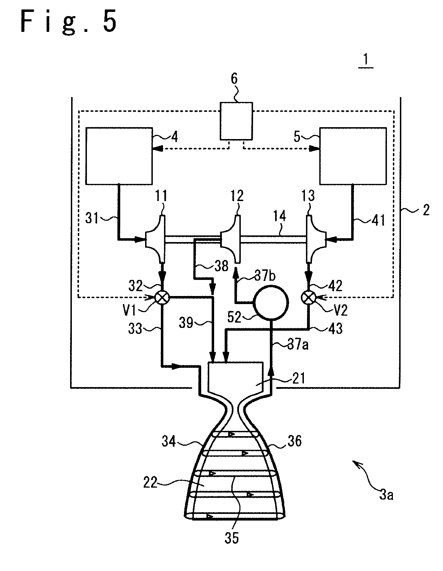

FIG. 5 is a diagram schematically showing the configuration of the rocket engine according to the present embodiment and the rocket to which the same is applied. In the rocket engine 3a of the present embodiment, the catalyst section 52 is provided not inside at least a part of the fuel passage of pipes 34 to 36 but on the way of the fuel passage of pipe 37 in the form of a unit different from the pipe as the catalyst reaction section. In other words, in the first embodiment, the catalyst section 51 is a part of the fuel passage of pipes 34 to 36, but in the present embodiment, the catalyst section 52 is an independent catalyst section and is provided on the way of the fuel passage. That is, the catalyst section 52 is is provided on the way of the fuel passage of pipes 31 to 39 and at a location behind a location where the fuel carries out the heat exchange with the nozzle 22. Specifically, the catalyst section 52 is provided between a fuel passage of pipe 37a and a fuel passage of pipe 37b. Here, the fuel passage of pipe 37a is connected with the other end of the fuel passage of pipe 36 at its one end and with the catalyst section 52 in its other end. The fuel passage of pipe 37b is connected with the catalyst section 52 at its one end and connected with the supply port of the turbine 12 in its other end.

The catalyst section 52 has a container and catalyst provided in the container. The catalyst of the same kind as in the first embodiment can be used. However, because the catalyst section 52 has a container shape, the catalyst of a plurality of shapes such as granularity or ring can be used to store inside the container without being conscious of a pressure loss. The thermochemical decomposition reaction is easily caused by passing the hydrocarbon fuel increased to a high temperature by cooling the combustion chamber 21 and the nozzle 22 through the catalyst section 52, so that the liquid fuel can be converted into the gaseous fuel. Note that in this case, the catalyst section 51 is not provided in the fuel passage of pipes 34 to 36.

In the present embodiment, the same effect as that of the first embodiment can be obtained.

Also, when the catalyst section is provided in the fuel passage with a small diameter, there is a possibility that the manufacturing cost rises. However, in the present embodiment, because an exclusive-use catalytic section easy to manufacture is provided as the catalyst section, the manufacturing cost can be suppressed. Also, when the catalyst section is provided in the fuel passage with the small diameter, there is a possibility to cause increase of a pressure loss. However, in the present embodiment, because the exclusive-use catalytic section easy to manufacture is provided as the catalyst section, the increase of pressure loss can be suppressed. Moreover, the operation temperature becomes low in the catalyst section 52 compared with the combustion chamber in which a propellant is combusted, so that the operation environment is eased. Thus, the phenomenon such as a caulking can be further prevented.

It could be seen that the present invention is not limited to each of the above embodiments and that each embodiment can be appropriately modified or changed in a range of the gist of the present invention.

The present invention is based on Japan Patent Application No. JP 2013-030410 and clams a priority of it. The disclosure thereof is incorporated herein by reference.

## Claims

1. A rocket engine comprising:
a fuel passage through which a hydrocarbon fuel flows;
a catalyst section provided on a way of the fuel passage to gasify the fuel;
a turbine provided on the way of the fuel passage and driven with the gasified fuel;
a first pump configured to supply the fuel to the fuel passage through a drive by the turbine;
a combustion chamber configured to combust the gasified fuel supplied through the fuel passage by using an oxidizer; and
a nozzle configured to send out the combustion gas and carry out heat exchange with a part of the fuel passage to be cooled.

2. The rocket engine according to claim 1, wherein the fuel passage comprises:
a first path configured to lead the fuel to the combustion chamber after the heat exchange and the gasification of the fuel in the catalyst section; and
a second path configured to lead the fuel to the combustion chamber just as it is,
wherein the combustion chamber combusts a mixture of the gasified fuel supplied through the first path and the fuel supplied through the second path.

3. The rocket engine according to claim 1 or 2, wherein the catalyst section is provided inside the fuel passage in a location where the heat exchange is carried out.

4. The rocket engine according to claim 3, wherein the catalyst section gasifies the fuel through a thermochemical decomposition with catalyst, and cools the nozzle with endothermic reaction of the thermochemical decomposition.

5. The rocket engine according to claim 3 or 4, wherein the catalyst section is formed in a layer to cover an inner wall of the fuel passage.

6. The rocket engine according to claim 1 or 2, wherein the catalyst section is provided in a location where is on a way of the fuel passage and where is rear a heat exchange position with the nozzle.

7. The rocket engine according to claim 6, wherein the catalyst section comprises a plurality of catalyst grains in a container.

8. The rocket engine according to any one of claims 1 to 7, further comprises:
an oxidizer passage configured to supply an oxidizer to the combustion chamber; and
a second pump configured to supply the oxidizer to the oxidizer passage through a drive by the turbine,
wherein the turbine, the first pump and the second pump are connected with the same rotation axis.

9. A rocket comprising:
the rocket engine according to any one of claims 1 to 8;
a fuel tank connected with the fuel passage of the rocket engine; and
an oxidizer tank connected with the oxidizer passage of the rocket engine.

10. A start method of a rocket engine, comprising:
supplying a hydrocarbon fuel and an oxidizer to a combustion chamber using a pressure to combust therein;
supplying, when the combustion chamber is heated through the combustion, the fuel to a catalyst section by using the pressure to gasify the fuel, while cooling the nozzle through heat exchange;
driving a turbine with the gasified fuel;
driving a first pump by the turbine to gasify a part of the fuel in the catalyst section while cooling the nozzle by the heat exchange;
driving the first pump by the turbine to supply a remaining portion of the fuel to the combustion chamber;
driving a second pump by the turbine to supply the oxidizer to the combustion chamber; and
combusting the gasified fuel, the supplied fuel and the supplied oxidizer in the combustion chamber.
